# EUROPÄISCHE PATENTSCHRIFT

(11) **EP 1 172 600 B1**
(45) Veröffentlichungstag und Bekanntmachung des Hinweises auf die Patenterteilung: **11.05.2005**
(21) Anmeldenummer: 01115905.0
(22) Anmeldetag: 29.06.2001
(51) Int. Cl.: F16M 11/10

(54) **Flachbildschirm mit gelenkig angeschlossenem Fuss**
Flat-display panel pivotally mounted on a base
Ecran plat monté sur un pied à articulation

(30) Priorität: 13.07.2000 DE 10034026
(43) Veröffentlichungstag der Anmeldung: 16.01.2002
(73) Patentinhaber: Zühlsdorf, Ralph, 99638 Riethgen (DE)
(72) Erfinder: Zühlsdorf, Ralph, D-99638 Riethgen (DE); Hildebrandt, Christina, D-99610 Kleinbrembach (DE); Hönniger, Uwe, D-99625 Kölleda (DE); Breuer, Ulrich, D-99625 Kölleda (DE)
(74) Vertreter: Liedtke, Klaus, Dr.

(56) Entgegenhaltungen:
- EP-A- 0 321 120
- DE-U- 29 711 779
- US-A- 4 552 418
- US-A- 5 109 411
- US-A- 5 320 311
- US-A- 5 812 368
- PATENT ABSTRACTS OF JAPAN vol. 017, no. 277 (P-1546), 27. Mai 1993 (1993-05-27) -& JP 05 011707 A (MATSUSHITA ELECTRIC IND CO LTD), 22. Januar 1993 (1993-01-22)
- PATENT ABSTRACTS OF JAPAN vol. 1997, no. 08, 29. August 1997 (1997-08-29) -& JP 09 090878 A (TOSHIBA COMPUT ENG CORP;TOSHIBA CORP), 4. April 1997 (1997-04-04)

## Beschreibung

Die Erfindung betrifft einen Flachbildschirm mit gelenkig angeschlossenem Fuß.

Die Erfindung wird vorzugsweise zur Aufstellung von Flachbildschirmen auf horizontalen, ebenen Unterlagen, insbesondere auf Tischen, und zur Anordnung von Flachbildschirmen an vertikalen Ebenen, insbesondere an Wänden, angewendet.

Im Stand der Technik sind verschiedene Flachbildschirme mit gelenkig angeschlossenem Fuß bekannt.

Dabei sind Flachbildschirme mit gelenkig angeschlossenem Fuß bekannt, deren Gelenke über definierte Reibungswiderstände die Einstellung beliebiger Neigungswinkel erlauben, wie z.B. aus der JP 05 011 707 A.

Nachteilig bei diesen Flachbildschirmen ist, dass eine feste Fixierung vorbestimmter Neigungswinkel nicht möglich ist. Weiterhin ist nachteilig, dass bei einer Anordnung der Flachbildschirme an vertikalen Flächen die Flachbildschirme entweder unmittelbar an Wänden aufgehängt werden und somit nur eine vertikale Anordnung ermöglicht wird oder aber dass zur Realisierung von unterschiedlichen Neigungswinkeln bei Wandmontage die Anordnung zusätzlicher Konsolen zur Aufstellung von Flachbildschirmen erforderlich ist.

Der Erfindung liegt die Aufgabe zugrunde, einen einfach herzustellenden Flachbildschirm mit gelenkig angeschlossenem Fuß anzugeben, der sowohl für die Aufstellung auf ebenen Unterlagen, insbesondere auf Tischen, als auch zur geneigten Anordnung an vertikalen Ebenen, insbesondere an Wänden, geeignet ist und außerdem die Fixierung bestimmter Neigungswinkel ermöglicht.

Erfindungsgemäß wird die Aufgabe mit den kennzeichnenden Merkmalen von Anspruch 1 gelöst.

Vorteilhafte Ausgestaltungen sind in den Unteransprüchen angegeben.

Die Erfindung weist eine Reihe von Vorteilen auf. Durch die Verbindung des unteren Randes des Flachbildschirmes über ein Gelenk mit dem vorderen Rand einer Fußplatte und die Anordnung der Drehachse des Gelenkes parallel zum unteren Rand des Flachbildschirmes und zum vorderen Rand der Fußplatte und die Anordnung von mindestens zwei Löchern am hinteren Rand der Fußplatte wird eine einfache und schnelle Befestigung der Fußplatte an einer Wand und somit die vertikale oder geneigte Anordnung des Flachbildschirmes an einer Wand ohne Umbau und ohne zusätzliches Bauteil ermöglicht. Durch die Anordnung einer Einrichtung zur Arretierung am Gelenk wird eine sichere Fixierung bestimmter Neigungswinkel, insbesondere bei Wandmontage, ermöglicht.

Die Erfindung wird im folgenden anhand eines Ausführungsbeispiels näher erläutert.

Dazu zeigen
- Figur 1: eine Seitenansicht eines Flachbildschirmes mit gelenkig angeschlossenem Fuß, auf horizontale Ebene aufgestellt;
- Figur 2: eine Seitenansicht eines Flachbildschirmes mit gelenkig angeschlossenem Fuß, Wandmontage
- Figur 3: eine Draufsicht auf eine Fußplatte mit Gelenk, eckige Variante
- Figur 4: eine Draufsicht auf eine Fußplatte mit Gelenk, runde Variante 1
- Figur 5: wie Figur 4 nur runde Variante 2
- Figuren 6, 6a: isometrische Darstellungen eines Gelenkes
- Figuren 7, 7a: weitere isometrische Darstellungen eines Gelenkes

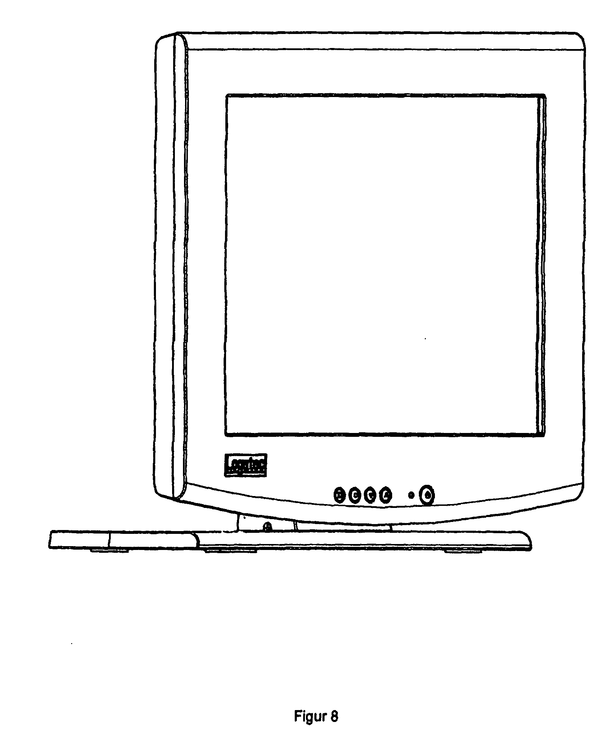

- und Figur 8: eine Gesamtansicht in Kavaliersperspektive.

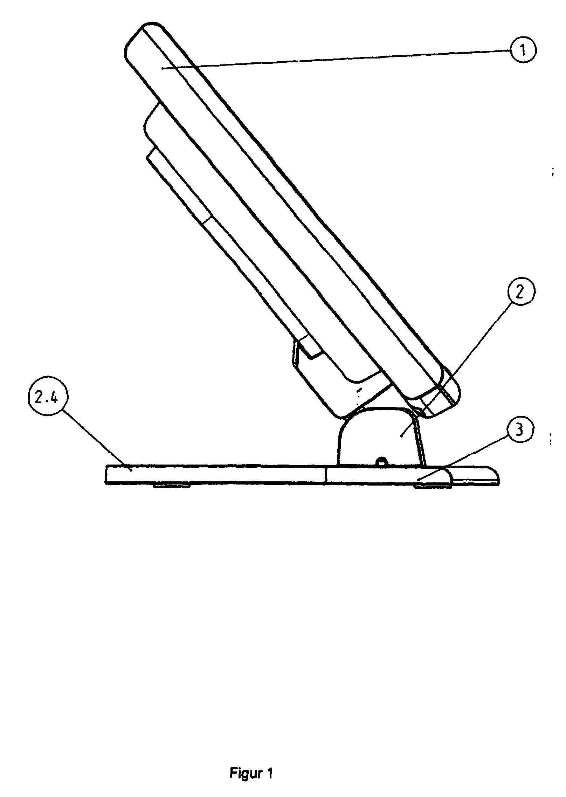

In Figur 1 ist ein Flachbildschirm 1 dargestellt, dessen unterer Rand mittels eines Gelenkes 2, welches mit einer Abdeckung 2.4 geschützt ist, mit dem vorderen Rand einer Fußplatte 3 verbunden ist, dargestellt. Die Fußplatte 3 ist dabei auf einer horizontalen Ebene aufgestellt.

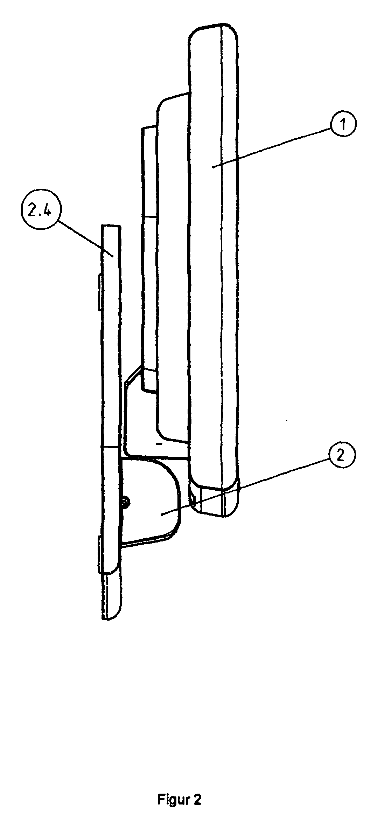

In Figur 2 ist ein Flachbildschirm 1 dargestellt, bei dem die Fußplatte 3 an einer vertikalen Ebene aufgehängt ist.

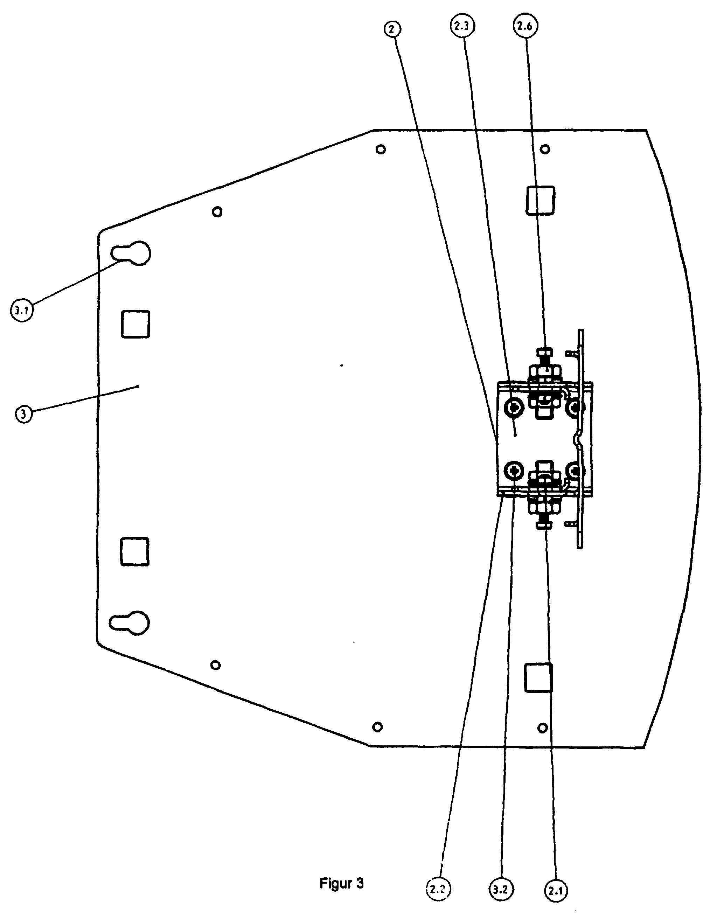

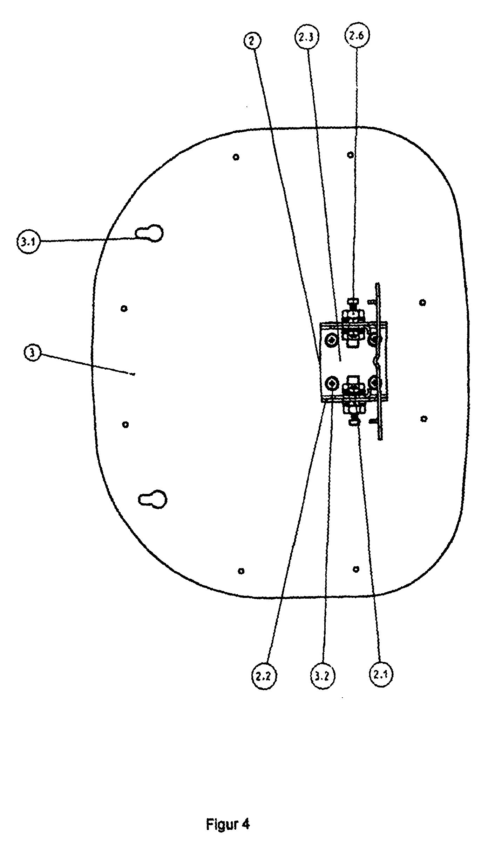

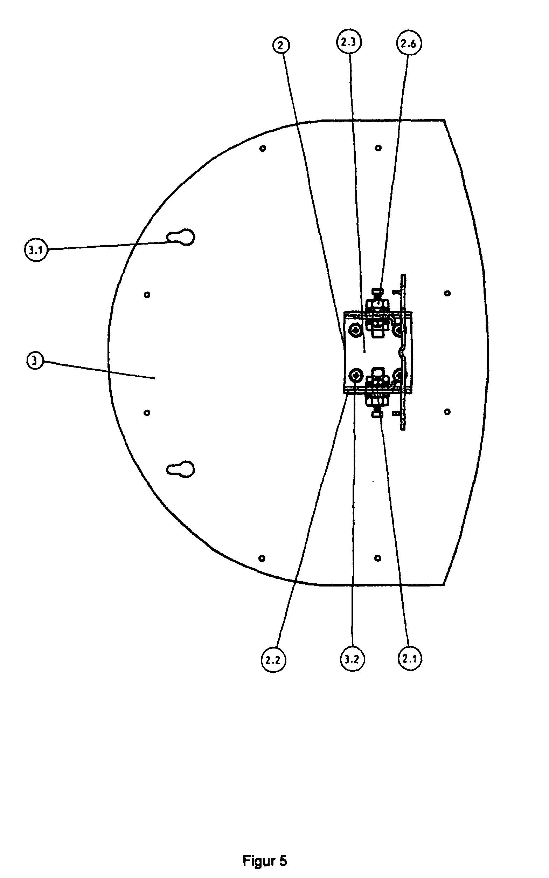

Die Figuren 3, 4 und 5 zeigen eine Draufsicht auf die mit dem Gelenk 2 bestückte und mit zwei Bohrungen 3.1 versehene Fußplatte 3. Dabei zeigt die Figur 3 die eckige Variante und die Figuren 4 und 5 die runden Varianten. Die zwei Bohrungen 3.1 sind am hinteren Rand der Fußplatte 3 angeordnet und dienen der Aufhängung der Fußplatte 3 an Wänden. Am vorderen Rand der Fußplatte 3 ist das Gelenk 2 angeordnet. Das Gelenk 2 beinhaltet einen Fußwinkel 2.3, welcher mit Schrauben 3.2 an der Fußplatte 3 befestigt ist. An den seitlichen Enden des Fußwinkels 2.3 sind normal zur Drehachse des Gelenkes 2 zwei Schenkel 2.2 des Fußwinkels 2.3 nach oben abgewinkelt. Normal zur Schenkelebene ist jeweils eine Schraube 2.6 angeordnet, welche durch je eine Mutter 2.11 gegen Herausschieben gesichert ist. Zwischen den Schenkeln 2.2 des Fußwinkels sind normal zur Schraube 2.6 flache, langgestreckte und mit jeweils einer Bohrung in der Drehachse versehene Befestigungselemente 2.1 auf die Schrauben 2.6 aufgeschoben, so dass die Befestigungselemente 2.1 zunächst frei um die Schrauben 2.6 drehbar sind. Die Befestigungselemente 2.1 dienen der Befestigung des Gelenkes 2 mittels Aufnahmewinkels 1.1 am Flachbildschirm 1.

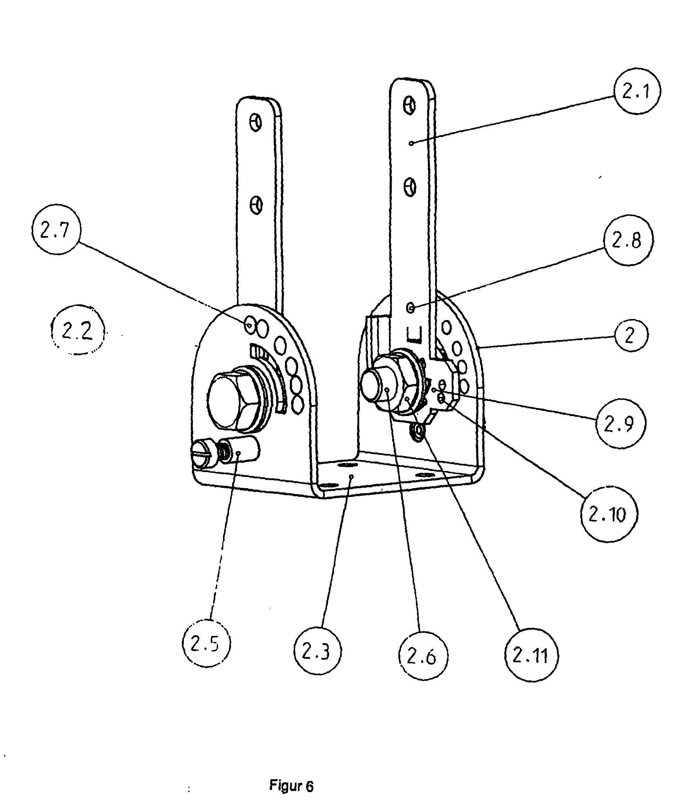

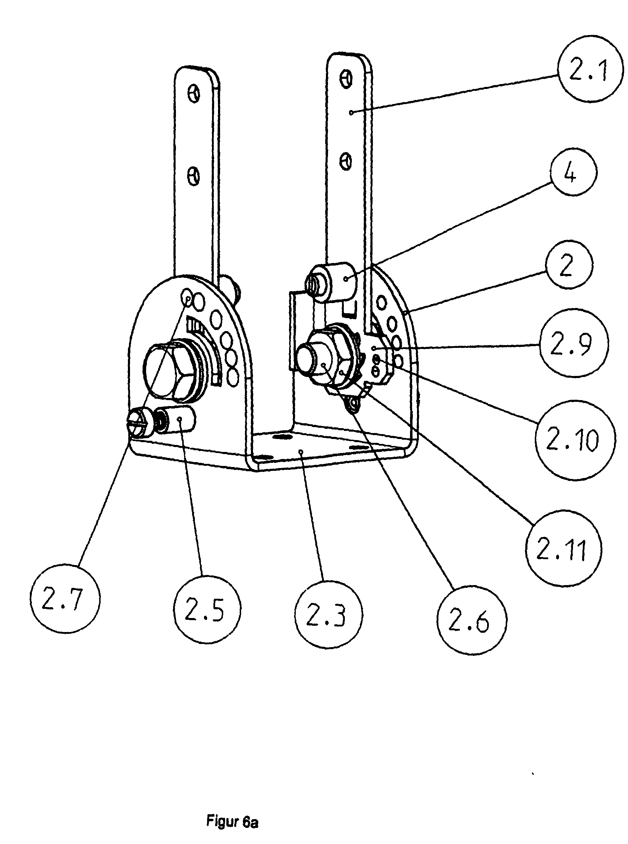

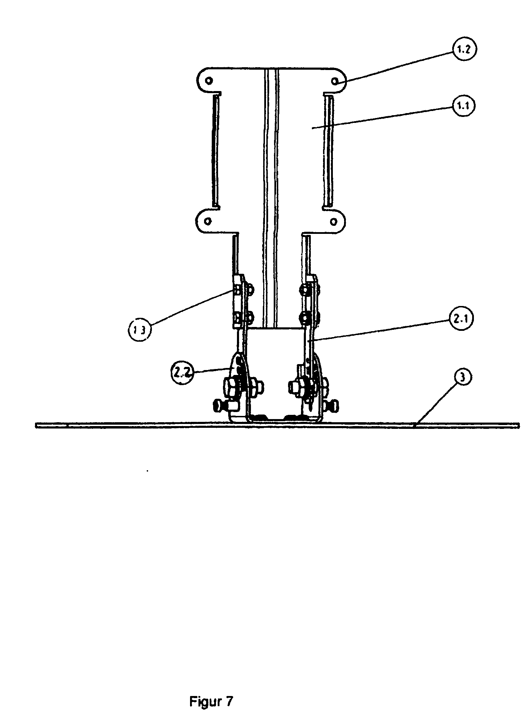

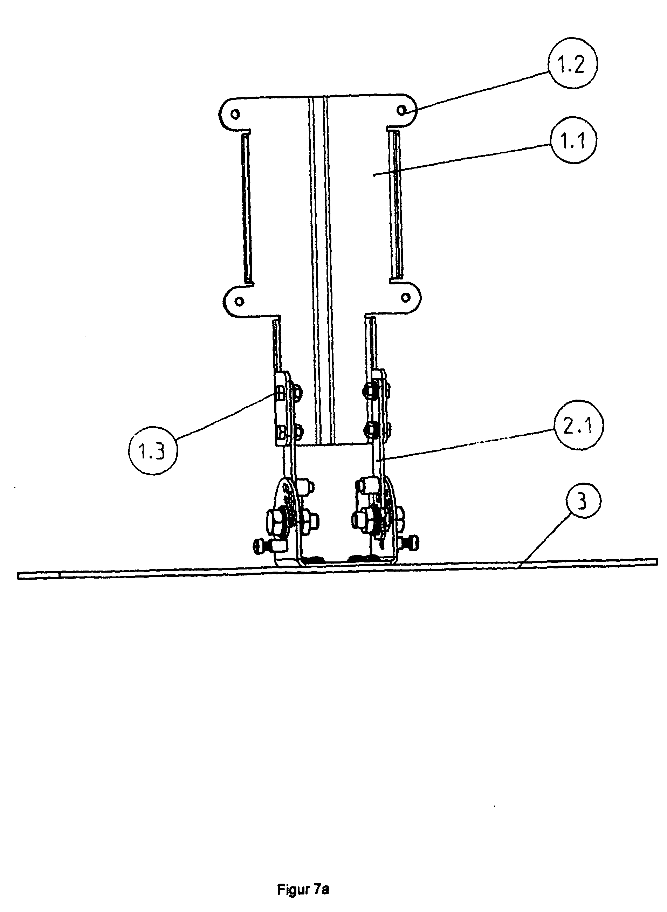

Die Figuren 6 ,6a, 7 und 7a zeigen einen detaillierten Aufbau eines erfindungsgemäßen Gelenkes 2 mit einem Neigungswinkel von 90° in isometrischer Ansicht. Die flachen, langgestreckten und auf die Schrauben 2.6 aufgeschobenen Befestigungselemente 2.1 liegen unmittelbar an den Schenkeln des Fußwinkels 2.2 an und sind im Bereich der mit Muttern 2.11 gesicherten Schrauben 2.6 mit einer Lasche 2.9 versehen. In den Schenkeln 2.2 sind jeweils sechs Prägungen I 2.7 mit jeweils gleichem Abstand von der Drehachse des Gelenkes 2 und in jedem Befestigungselement 2.1 ist bei den in den Figuren 6 und 7 dargestellten Ausführungen jeweils eine mit den Prägungen I 2.7 korrespondierende und nach außen gerichtete Prägung II 2.8 und bei den in den Figuren 6a und 7a dargestellten Ausführungen eine mit den Prägungen I 2.7 korrespondierende Arretierung (federndes Druckstück) 4 angeordnet. Beim Verdrehen der Befestigungselemente 2.1 rasten deren Prägungen II 2.8 bzw. die Arretierungen 4 je nach Verdrehungswinkel in eine der sechs Prägungen I 2.7 ein; damit sind durch Anzahl und Lage der Prägungen I 2.7 die Anzahl der Werte von Neigungswinkeln vorbestimmt. In den Überständen 2.9 der Befestigungselemente 2.1 sind jeweils zwei Gewindelöcher 2.10 und an jedem Schenkel 2.2 des Fußwinkels ist normal zur Schenkelebene jeweils eine unverlierbare Schraube 2.5 angeordnet, wobei der Abstand der Achse der unverlierbaren Schrauben 2.5 und der Abstand der jeweils zwei Löcher 2.10 von der Schraube 2.6 gleich groß ist, so dass für zwei vorbestimmte Neigungswinkel (im dargestellten Fall 0° und 15°) die unverlierbaren Schrauben 2.5 in die jeweils korrespondierenden Gewindelöcher 2.10 eingeschraubt werden können und somit eine starre Fixierung der vorbestimmten Neigungswinkel von 0° oder 15° erlauben. Die starre Fixierung der Neigungswinkel ist insbesondere bei der Wandmontage von Bedeutung, da die Winkel von 0° oder 15° eine vertikale oder leicht nach unten geneigte Anordnung bedeuten, so dass auch oberhalb der Augenhöhe an Wänden angeordnete Flachbildschirme sowohl sicher fixiert als auch möglichst normal zur Bildschirmebene und somit entspannt betrachtet werden können. In jedem Schenkel 2.2 ist ein 90°-Kreisbogenschlitz ausgespart, in welchem eine weitere, ebenfalls nach außen gerichtete, Prägung des zugehörigen Befestigungselementes 2.1 bei Verdrehung des Befestigungselementes 2.1 geführt wird.

Die Figuren 7 und 7a zeigen den Anschluss der Befestigungselemente 2.1 an einem Aufhahmewinkel 1.1. Am Aufnahmewinkel 1.1 wird mittels Verschraubungen I 1.2 der Flachbildschirm 1 befestigt. Im Bereich des Anschlusses zwischen den Befestigungselementen 2.1 und dem Aufnahmewinkel 1.1 weist der aus Blech gefertigte Aufnahmewinkel 1.1 abgewinkelte Schenkel auf, an denen mittels Verschraubungen II 1.3 die Befestigungselemente 2.1 befestigt sind. Der Abstand der von dem Aufnahmewinkel 1.1 abgewinkelten Schenkel ist genau so groß wie der Abstand der Schenkel des Fußwinkels 2.2 untereinander, so dass auf Grund der Elastizität der Befestigungselemente 2.1 und der Schenkel 2.2 die Befestigungselemente 2.1 beim Verdrehen mit leichtem Druck an den Schenkeln des Fußwinkels 2.2 anliegen. Insbesondere bei Verdrehungszuständen, in denen sich die Prägungen II 2.8 bzw. die Arretierungen 4 neben den Prägungen I 2.7 befinden, wird durch die Federwirkung der elastischen Befestigungselemente 2.1 und Schenkel 2.2 des Fußwinkels eine gewisse Druckkraft aufgebaut, die das sichere Einrasten der Prägungen II 2.8 bzw. der Arretierungen 4 in eine der Prägungen I 2.7 ermöglicht. Durch die Anordnung eines Federelementes auf der Schraube 2.6 unmittelbar neben den Befestigungselementen 2.1 kann die Druckkraft zwischen Befestigungselementen 2.1 und Schenkeln des Fußwinkels 2.2 beim Verdrehen zusätzlich erhöht werden.

### BEZUGSZEICHENLISTE

- 1: Flachbildschirm
1.1 Aufnahmewinkel
1.2 Verschraubung I
1.3 Verschraubung II
- 2: Gelenk
2.1 Befestigungselement
2.2 Schenkel des Fußwinkels
2.3 Fußwinkel
2.4 Abdeckung
2.5 unverlierbare Schrauben
2.6 Schraube
2.7 Prägung I
2.8 Prägung II
2.9 Lasche
2.10 Gewindeloch
2.11 Mutter
- 3: Fußplatte
3.1 Löcher
3.2 Schrauben
- 4: Arretierung (federndes Druckstück)

## Patentansprüche

1. Flachbildschirm mit gelenkig angeschlossenem Fuß, wobei
- der untere Rand des Flachbildschirmes (1) über ein Gelenk (2) mit dem vorderen Rand einer Fußplatte (3) verbunden ist und die Drehachse des Gelenkes (2) parallel zum unteren Rand des Flachbildschirmes (1) und zum vorderen Rand der Fußplatte (3) verläuft,
- am Gelenk (2) eine Einrichtung zur Arretierung angeordnet ist und
- am hinteren Rand der Fußplatte (3) mindestens zwei Löcher (3.1) zur vertikalen Befestigung der Fußplatte an einer Wand angeordnet sind.
**dadurch gekennzeichnet,**
- **dass** das Gelenk (2) eine an der Fußplatte (3) befestigte Grundplatte (2.3) mit zwei aufgebogenen seitlichen Schenkeln eines Fußwinkels (2.2) beinhaltet,
- **dass** durch die Schenkel (2.2) je eine Schraube (2.6) geführt ist,
- **dass** die Schrauben (2.6) durch Bohrungen in flachen Befestigungselementen (2.1), welche zwischen den Schenkeln des Fußwinkels (2.2) angeordnet und mit dem Flachbildschirm (1) verbunden sind, verläuft und
- **dass** als Mittel zur Fixierung bestimmter Neigungswinkel zwischen Flachbildschirm (1) und Fußplatte (3) unverlierbare Schrauben (2.5) und dazu Korrespondierende Gewindelöcher (2.10) am Gelenk (2) angeordnet sind.

2. Flachbildschirm nach Anspruch 1, **dadurch gekennzeichnet,**
- **dass** die Befestigungselemente (2.1) an den Schenkeln des Fußwinkels (2.2) anliegen,
- **dass** die Befestigungselemente (2.1) mit einem Aufnahmewinkel (1.1) mittels Verschraubungen (1.3) verbunden sind und
- **dass** der Aufnahmewinkel 1.1 mit Verschraubungen I 1.2 an dem Flachbildschirm 1 befestigt wird,
- **dass** in den Schenkeln des Fußwinkels (2.2) mehrere Prägungen I (2.7) mit jeweils gleichem Abstand von der Drehachse des Gelenkes (2) und in jedem Befestigungselement (2.1) jeweils eine mit den Prägungen I (2.7) korrespondierende Prägung II (2.8) angeordnet sind.

3. Flachbildschirm nach Anspruch 1 oder 2, **dadurch gekennzeichnet,**
- **dass** die unverlierbaren Schrauben (2.5) an den Schenkeln des Fußwinkels (2.2) angeordnet sind,
- **dass** jedes Befestigungselement (2.1) im Bereich der Schraube (2.6) eine Lasche (2.9) aufweist und
- **dass** in den Laschen (2.9) mit den unverlierbaren Schrauben (2.5) korrespondierende Gewindelöcher (2.10) zur Fixierung der Befestigungselemente (2.1) an den Schenkeln des Fußwinkels (2.2) mittels der unverlierbaren Schrauben (2.5) angeordnet sind.

4. Flachbildschirm nach einem der vorhergehenden Ansprüche, **dadurch gekennzeichnet, dass** die Fußplatte (3) zur Gewährleistung einer hohen Standsicherheit etwa mit dem Gewicht des Flachbildschirmes (1) ausgebildet ist.

5. Flachbildschirm nach einem der vorhergehenden Ansprüche, **dadurch gekennzeichnet, dass** an der Unterseite der Fußplatte (3) elastische Elemente zur Gewährleistung einer höhen Rutschsicherheit angeordnet sind.

6. Flachbildschirm nach einem der vorhergehenden Ansprüche, **dadurch gekennzeichnet, dass** über dem Gelenk (2) eine Abdeckung (2.4) angeordnet ist.

## Claims

1. Flat screen having a jointed foot, wherein
- the bottom edge of the flat screen (1) is connected to the front edge of a foot plate (3) via a joint (2) and the pivot of the joint (2) is running parallel with the bottom edge of the flat screen (1) and with the front edge of the foot plate (3),
- a locking facility is arranged at the joint (2) and
- at least two holes (3.1) are arranged at the back edge of the foot plate (3) for vertically mounting the foot plate on a wall,
**characterised in**
- **that** the joint (2) comprises a base plate (2.3) fixed to the foot plate (2.3), the base plate having two bent up lateral blades of a base angle (2.2),
- **that** a respective screw (2.6) is guided through each of the blades (2.2),
- **that** the screws (2.6) are running through bores in flat fixing elements (2.1) which are arranged between the blades of the base angle (2.2) and connected to the flat screen (1) and
- **that** undetachable screws (2.5) and corresponding threaded holes (2.10) are arranged at the joint (2) as means for fixing certain tilt angles between flat screen (1) and foot plate (3).

2. Flat screen according to claim 1, **characterised in**
- **that** the fixing elements (2.1) rest against the blades of the base angle (2.2),
- **that** the fixing elements (2.1) are connected to a receptacle angle (1.1) by means of screw connections and
- **that** the receptacle angle (1.1) is fastened to the flat screen (1) using screw connections I (1.2),
- **that** several stampings I (2.7) are arranged in the blades of the base angle (2.2), the stampings having the same distance from the pivot of the joint (2), respectively, and a respective stamping II (2.8) which is corresponding with the stampings I (2.7) is arranged in each fixing element (2.1).

3. Flat screen according to claim 1 or 2, **characterised in**
- **that** the undetachable screws (2.5) are arranged at the blades of the base angle (2.2),
- **that** each fixing element (2.1) exhibits an ear (2.9) in the area of the screw (2.6) and
- **that**, within the ears (2.9) having the undetachable screws (2.5), corresponding threaded holes (2.10) are arranged for fixing the fixing elements (2.1) at the blades of the base angle (2.2) by means of the undetachable screws (2.5).

4. Flat screen according to one of the preceding claims, **characterised in that** the foot plate (3) is designed to have about the weight of the flat screen (1) for ensuring a high stability.

5. Flat screen according to one of the preceding claims, **characterised in that** elastic elements are arranged at the bottom of the foot plate (3) for ensuring a high slipping security.

6. Flat screen according to one of the preceding claims, **characterised in that** a cover (2.4) is arranged above the joint (2).

## Revendications

1. Ecran plat à pied à raccord articulé, où
- le bord inférieur de l'écran plat (1) est relié par une articulation (2) au bord supérieur d'un socle (3) et où l'axe de pivotement de l'articulation (2) s'étend parallèlement au bord inférieur de l'écran plat (1) et au bord avant du socle (3),
- un mécanisme d'arrêt est disposé sur l'articulation (2), et où
- au moins deux trous (3.1) sont disposés sur le bord inférieur du socle (3) pour la fixation verticale du socle sur un mur
**caractérisé en ce que**
- l'articulation (2) comporte une plaque de base (2.3) fixée sur le socle (3) avec deux montants latéraux cintrés d'une équerre de base (2.2),
- **en ce qu'**une vis (2.6) est passée dans chaque montant (2.2),
- **en ce que** les vis (2.6) traversent des trous d'alésage dans des éléments de fixation plats (2.1), lesquels sont disposés entre les montants de l'équerre de base (2.2) et reliés à l'écran plat (1), et **en ce que**
- des vis imperdables (2.5) et des trous taraudés correspondants (2.10) sont disposés sur l'articulation (2) comme moyens de fixation à un angle d'inclinaison défini entre l'écran plat (1) et le socle (3).

2. Ecran plat selon la revendication 1, **caractérisé en ce que,**
- les éléments de fixation (2.1) reposent contre les montants de l'équerre de base (2.2),
- les éléments de fixation (2.1) sont reliés à une équerre de réception (1.1) au moyen de raccords à vis (1.3), et **en ce que**
- l'équerre de réception (1.1) est fixée sur l'écran plat (1) par des raccords à vis I (1.2),
- plusieurs bosses d'estampage I (2.7) à la même distance chacune de l'axe de pivotement de l'articulation (2) sont disposées sur les montants de l'équerre de base (2.2) et une bosse d'estampage II (2.8) correspondant aux bosses d'estampage I est disposée dans chaque élément de fixation (2.1).

3. Ecran plat selon la revendication 1 ou 2, **caractérisé en ce que**
- les vis imperdables (2.5) sont disposées sur les montants de l'équerre de base (2.2),
- chaque élément de fixation (2.1) présente une patte (2.9) au niveau de la vis (2.6), et **en ce que**
- des trous taraudés correspondants (2.10) pour la fixation des éléments de fixation (2.1) sur les montants de l'équerre de base (2.2) au moyen des vis imperdables (2.5) sont disposés sur les pattes (2.9) avec les vis imperdables (2.5).

4. Ecran plat selon l'une des revendications précédentes, **caractérisé en ce que** le socle (3) est prévu approximativement du même poids que l'écran plat (1) afin d'assurer une stabilité élevée.

5. Ecran plat selon l'une des revendications précédentes, **caractérisé en ce que** des éléments élastiques sont disposés sur la face inférieur du socle (3) pour assurer une sécurité élevée contre le dérapage.

6. Ecran plat selon l'une des revendications précédentes, **caractérisé en ce qu'**un cache (2.4) est disposé au-dessus de l'articulation (2).
